# EUROPEAN PATENT APPLICATION

(11) **EP 4 675 702 A1**
(43) Date of publication of application: **07.01.2026**
(21) Application number: 24763625.1
(22) Date of filing: 15.02.2024
(51) Int. Cl.: H01M 4/36, H01M 4/13

(54) **ELECTRODE AND BATTERY**

(30) Priority: 28.02.2023 JP 2023029421
(71) Applicant: Panasonic Intellectual Property Management Co., Ltd., Kadoma-shi, Osaka 571-0057 (JP)
(72) Inventor: MASUMOTO, Yui, Kadoma-shi, Osaka 571-0057 (JP); TAKEZAWA, Hideharu, Kadoma-shi, Osaka 571-0057 (JP); TSUJITA, Takuji, Kadoma-shi, Osaka 571-0057 (JP); YAMAMOTO, Takao, Kadoma-shi, Osaka 571-0057 (JP)
(74) Representative: Novagraaf International SA
(86) International application number: PCT/JP2024/005199
(87) International publication number: WO 2024/181142

(57) **Abstract**

An electrode 100 of the present disclosure includes a first active material 1, a second active material 2, and a coating material 3. The first active material 1 has a surface of which 0% or more and less than 35% is coated with the coating material 3, and the second active material 2 has a surface of which 90% or more is coated with the coating material 3. The coating material 3 includes Li, Ti, M, and F, where M is at least one selected from the group consisting of Ca, Mg, AI, Y, and Zr.

## Description

### TECHNICAL FIELD

The present disclosure relates to an electrode and a battery.

### BACKGROUND ART

In a conventional battery, an electrolyte may be decomposed by an active material. When the electrolyte is decomposed, a coating membrane of the decomposition product of the electrolyte is formed in the electrode. This leads to disadvantages such as an increase in the internal resistance of the battery, and decrease in the cycle characteristics of the battery.

When the active material is coated with an appropriate coating material, decomposition of the electrolyte due to the active material is suppressed. For example,

Patent Literature 1 discloses coating the positive electrode active material with a solid electrolyte including Li, Ti, Al, and F.

### CITATION LIST

### Patent Literature

Patent Literature 1: WO 2021/187391

### SUMMARY OF INVENTION

### Technical Problem

Conventional technologies have room for improvement in attaining compatibility between output characteristics and high-temperature resistance.

### Solution to Problem

An electrode of the present disclosure includes:
a first active material;
a second active material; and
a coating material, wherein
the first active material has a surface of which 0% or more and less than 35% is coated with the coating material,
the second active material has a surface of which 90% or more is coated with the coating material, and
the coating material includes Li, Ti, M, and F,
where M is at least one selected from the group consisting of Ca, Mg, Al, Y, and Zr.

### Advantageous Effects of Invention

According to the technology of the present disclosure, it is possible to provide a battery in which compatibility between output characteristics and high-temperature resistance is attained.

### BRIEF DESCRIPTION OF THE DRAWINGS

FIG. 1 is a cross-sectional view showing a schematic configuration of an example of an electrode according to Embodiment 1.
FIG. 2 is a cross-sectional view showing a schematic configuration of another example of an electrode according to Embodiment 1.
FIG. 3 is a cross-sectional view showing a schematic configuration of still another example of an electrode according to Embodiment 1.
FIG. 4 is a cross-sectional view showing a schematic configuration of a battery according to Embodiment 2.
FIG. 5 shows an electron micrograph of a cross section of a second active material according to Example 1.

### DESCRIPTION OF EMBODIMENTS

Hereinafter, embodiments of the present disclosure will be described in detail with reference to the drawings. The present disclosure is not limited to the embodiments below.

### (Embodiment 1)

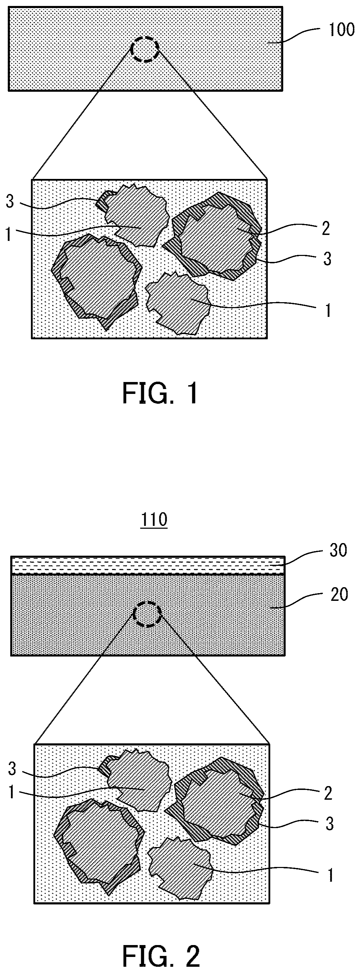

FIG. 1 is a cross-sectional view showing a schematic configuration of an example of an electrode according to Embodiment 1. An electrode 100 includes a first active material 1, a second active material 2, and a coating material 3. The surface of the first active material 1 is coated with the coating material 3 in an area proportion of 0% or more and less than 35%. The surface of the second active material 2 is coated with the coating material 3 in an area proportion of 90% or more. The coating material 3 includes Li, Ti, M, and F. M is at least one selected from the group consisting of Ca, Mg, Al, Y, and Zr.

The coating material 3 prevents direct contact between the active material, particularly, the second active material 2, and the other materials such as an electrolytic solution and a solid electrolyte. The coating material 3 is excellent in oxidation resistance. Accordingly, decomposition of the other materials such as the electrolytic solution and the solid electrolyte is reduced. Meanwhile, since the first active material 1 has the surface of which 0% or more and less than 35% is coated with the coating material 3, and thus has a surface not coated with the coating material 3, the first active material 1 suppresses decrease in discharge voltage. Therefore, the electrode 100 according to Embodiment 1 can realize a battery in which compatibility between output characteristics and high-temperature resistance is attained.

The coating ratio, by the coating material 3, of the surfaces of the first active material 1 and the second active material 2 can be derived according to an analysis method using a transmission electron microscope (TEM).

The first active material 1 may have the surface of which 0% or more and less than 33% is coated with the coating material 3, or may have the surface of which 0% or more and 32% or less is coated with the coating material 3.

As shown in FIG. 1, the first active material 1 may include an active material whose surface is not coated with the coating material 3. The first active material 1 may be substantially composed of an active material whose surface is not coated with the coating material 3. "The first active material 1 is substantially composed of an active material whose surface is not coated with the coating material 3" means that the mass proportion of the non-coated active material with respect to the first active material 1 included in the electrode 100 is 90% or more. The first active material 1 may be composed only of the active material whose surface is not coated with the coating material 3.

The second active material 2 may have the surface of which 95% or more is coated with the coating material 3. As shown in FIG. 1, the second active material 2 may include an active material whose entire surface is coated with the coating material 3. The second active material 2 may be substantially composed of an active material whose entire surface is coated with the coating material 3. "The second active material 2 is substantially composed of an active material whose entire surface is coated with the coating material 3" means that the mass proportion of the active material whose entire surface is coated with the coating material 3, with respect to the second active material 2 included in the electrode 100, is 90% or more. The second active material 2 may be composed only of an active material whose entire surface is coated with the coating material 3.

The mass proportion of the first active material 1 with respect to the total of the first active material 1 and the second active material 2 may be more than 0% and 67% or less, may be more than 0% and less than 67%, may be more than 0% and 66% or less, may be more than 0% and 50% or less, may be 10% or more and 50% or less, may be more than 0% and 20% or less, or may be more than 0% and 10% or less.

The mass proportion of the first active material 1 with respect to the entire active material in the electrode 100 may be more than 0% and 67% or less, may be more than 0% and less than 67%, may be more than 0% and 66% or less, may be more than 0% and 50% or less, may be 10% or more and 50% or less, may be more than 0% and 20% or less, or may be more than 0% and 10% or less.

The mass proportion of the active material whose surface is not coated with the coating material 3, with respect to the total of the first active material 1 and the second active material 2, may be 0% or more and 50% or less, may be more than 0% and 50% or less, may be more than 0% and 20% or less, or may be more than 0% and 10% or less.

The mass proportion of the active material whose surface is not coated with the coating material 3, with respect to the entire active material in the electrode 100, may be 0% or more and 50% or less, may be more than 0% and 50% or less, may be more than 0% and 20% or less, or may be more than 0% and 10% or less.

The first active material 1 and the second active material 2 may be a positive electrode active material or may be a negative electrode active material. Decomposition of the electrolyte easily occurs at the positive electrode, and thus, when the first active material 1 and the second active material 2 are a positive electrode active material, a higher effect can be expected.

When the active material is a positive electrode active material, examples of the positive electrode active material include lithium-containing transition metal oxides, lithium-containing transition metal phosphates, transition metal fluorides, polyanion materials, fluorinated polyanion materials, transition metal sulfides, transition metal oxysulfides, transition metal oxynitrides, and the like. Particularly, when a lithium-containing transition metal oxide or a lithium-containing transition metal phosphate is used as the positive electrode active material, the manufacturing cost of the battery can be made low, and the average discharge voltage can be increased. Examples of the lithium-containing transition metal oxide include lithium cobalt oxide, lithium nickel cobalt aluminum oxide, lithium nickel cobalt manganese oxide, lithium nickel manganese oxide, and the like. Examples of the lithium-containing transition metal phosphate include lithium iron phosphate, lithium vanadium phosphate, lithium cobalt phosphate, lithium nickel phosphate, and the like. At least one selected from these positive electrode active materials can be used.

When the first active material 1 and the second active material 2 are a negative electrode active material, examples of the negative electrode active material include lithium titanate and the like.

The first active material 1 and the second active material 2 may be materials having the same composition, or may be materials having compositions different from each other.

The particles of the active material may be primary particles or may be secondary particles. The particles of the active material have an average particle diameter of 1 µm or more and 10 µm or less, for example. The average particle diameter means the particle diameter (median diameter) when the cumulative volume in the particle size distribution on a volume basis is 50%. The particle size distribution on a volume basis is measured by a laser diffraction-type particle size distribution measurement device, for example.

The average particle diameter of the particles of the first active material 1 may be smaller than the average particle diameter of the particles of the second active material 2. When the particle diameter of the active material is smaller, the reaction resistance becomes smaller. Causing the average particle diameter of the particles of the first active material 1 having a small coating ratio by the coating material 3 and having a small reaction resistance to be smaller than the average particle diameter of the particles of the second active material 2 is effective for further improvement of the output characteristics of the battery.

The average particle diameter of the particles of the first active material 1 may be 10 µm or less. The average particle diameter of the particles of the first active material 1 is 1 µm or more and 10 µm or less, 1 µm or more and 7 µm or less, or 1 µm or more and 6 µm or less, for example. With this configuration, improved output characteristics can be achieved. The ratio of the average particle diameter of the particles of the first active material 1 with respect to the average particle diameter of the particles of the second active material 2 may be 0.8 or more and 1.0 or less or may be 0.8 or more and 0.95 or less.

The specific surface area of the first active material 1 may be larger than the specific surface area of the second active material 2. When the specific surface area of the active material is larger, the reaction resistance becomes smaller. Causing the specific surface area of the first active material 1 having a small coating ratio by the coating material 3 and having a small reaction resistance to be larger than the specific surface area of the second active material 2 is effective for further improvement of the output characteristics of the battery.

The specific surface area of the first active material 1 may be 0.5 m²/g or more or may be 4.0 m²/g or less. The specific surface area of the first active material 1 is 0.5 m²/g or more and 4.0 m²/g or less, 0.7 m²/g or more and 4.0 m²/g or less, or 0.8 m²/g or more and 3.8 m²/g or less, for example. With this configuration, improved output characteristics can be achieved. The ratio of the specific surface area of the first active material 1 with respect to the specific surface area of the second active material 2 may be 1.0 or more and 5.0 or less or may be 3.0 or more and 4.0 or less. With this configuration, compatibility between output characteristics and high-temperature resistance can be attained. In the present disclosure, the specific surface area is the BET specific surface area that can be measured by the BET method.

The coating material 3 includes Li, Ti, M, and F, as described above. The coating material 3 may be substantially composed of Li, Ti, M, and F, or may be composed only of Li, Ti, M, and F. Here, "the coating material 3 is substantially composed of Li, Ti, M, and F" means that the molar ratio of the total of the substance amount of Li, Ti, M, and F with respect to the total of the substance amounts of all elements forming the coating material 3 is 90% or more. As an example, the molar ratio may be 95% or more.

M may include Al.

The coating material 3 may include a material represented by a composition formula (1) below.

Li_{6-(4-4x+mx)b}(Ti₁₋ₓMₓ)_{b}F₆ ... formula (1)

Here, m is the valence of M, and 0<x<1 and 0<b≤3 are satisfied.

In the composition formula (1), when M includes a plurality of kinds of elements, m is the total value of the product of the composition ratio of each element and the valence of the element. For example, when M includes an element Me1 and an element Me2, the composition ratio of the element Me1 is a1, the valence of the element Me1 is m1, the composition ratio of the element Me2 is a2, and the valence of the element Me2 is m2, m is represented by m1a1+m2a2.

M may be at least one selected from the group consisting of AI and Y. M may be Al.

When M is at least one selected from the group consisting of AI and Y, the coating material 3 may include a material represented by a composition formula (2) below.

Li_{6-(4-x2)b2}(Ti₁₋ₓ₂Mₓ₂)_{b2}F₆ ... formula (2)

Here, 0<x2<1 and 0<b2≤1.5 are satisfied.

In the composition formula (2), M may be AI.

In the composition formula (2), 0.1≤x2≤0.9 and 0.8≤b2≤1.2 may be satisfied.

In this configuration, since the coating material 3 exhibits higher ion conductivity, the electrode 100 according to Embodiment 1 can improve the output characteristics and the high-temperature resistance of the battery.

The coating material 3 may include a material other than the material represented by the composition formula (1). The coating material 3 may include only the material represented by the composition formula (1), except for unavoidable impurities.

The coating material that coats the surface of the first active material 1 and the coating material that coats the surface of the second active material 2 may have compositions different from each other.

The electrode 100 may include a mixture of the first active material 1 and the second active material 2.

The electrode 100 may further include a current collector.

FIG. 2 is a cross-sectional view showing a schematic configuration of another example of an electrode according to Embodiment 1. An electrode 110 includes an active material layer 20 including the first active material 1, the second active material 2, and the coating material 3, and a current collector 30. The active material layer 20 includes a mixture of the first active material 1 and the second active material 2.

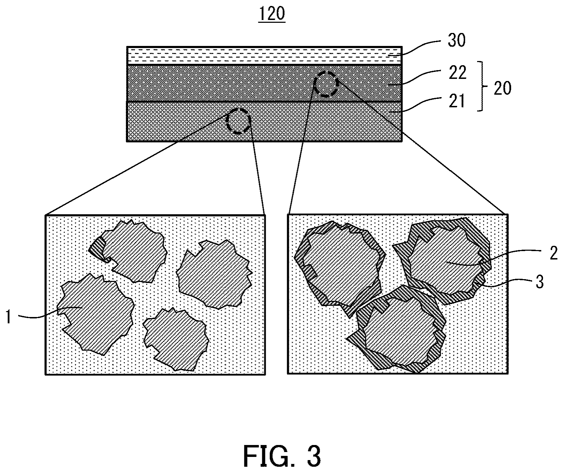

FIG. 3 is a cross-sectional view showing a schematic configuration of still another example of an electrode according to Embodiment 1. An electrode 120 shown in FIG. 3 includes a first active material layer 21 and a second active material layer 22. The first active material layer 21 includes the first active material 1 and the second active material layer 22 includes the second active material 2. That is, the first active material layer 21 includes the first active material 1 having a surface coated with the coating material 3 at a coating ratio of 0% or more and less than 35%, and the second active material layer 22 includes the second active material 2 having a surface coated with the coating material 3 at a coating ratio of 90% or more. With this configuration, the output characteristics of the battery can be improved.

As in the case of the electrode 120 shown in FIG. 3, the second active material layer 22 may be positioned between the first active material layer 21 and the current collector 30. With this configuration, the output characteristics of battery can be further improved.

The first active material layer 21 may include the first active material 1 as a main component of the active material. "The first active material layer 21 includes the first active material 1 as a main component of the active material" means that "in the first active material layer 21, the material most abundantly included, in mass ratio, as the active material is the first active material 1". The first active material layer 21 need not necessarily include the second active material 2. The first active material layer 21 may include only the first active material 1 as the active material. The second active material layer 22 may include the second active material 2 as a main component of the active material. "The second active material layer 22 includes the second active material 2 as a main component of the active material" means that "in the second active material layer 22, the material most abundantly included, in mass ratio, as the active material is the second active material 2". The second active material layer 22 need not necessarily include the first active material 1. The second active material layer 22 may include only the second active material 2 as the active material.

The active material layer 20 may include other materials such as a conductive agent, an ion conductor, and a binder.

The conductive agent and the ion conductor are used in order to reduce the resistance of the electrode. Examples of the conductive agent include carbon materials, conductive polymer compounds, and the like. Examples of the carbon material include carbon black, graphite, acetylene black, carbon nanotube, carbon nanofiber, graphene, fullerene, graphite oxide, and the like. Examples of the conductive polymer compound include polyaniline, polypyrrole, polythiophene, and the like. At least one selected from these conductive agents can be used.

Examples of the ion conductor include gel electrolytes such as polymethyl methacrylate and poly(methyl methacrylate), organic solid electrolytes such as polyethylene oxide, inorganic solid electrolytes such as Li₇La₃Zr₂O₁₂. At least one selected from these ion conductors can be used.

The binder is used in order to improve the binding property of the materials forming the electrode. Examples of the binder include polymer materials such as polyvinylidene fluoride, vinylidene fluoride-hexafluoropropylene copolymer, vinylidene fluoride-tetrafluoroethylene copolymer, polytetrafluoroethylene, carboxymethyl cellulose, polyacrylic acid, styrene-butadiene copolymer rubber, polypropylene, polyethylene, and polyimide. At least one selected from these binders can be used.

The electrode according to Embodiment 1 may further include an active material (hereinafter, referred to as "third active material") different from the first active material 1 and the second active material 2. The third active material is an active material having a surface of which 35% or more and less than 90% is coated with the coating material 3. As the third active material, the positive electrode active material or the negative electrode active material listed as examples in Embodiment 1 can be used, for example. The first active material 1 and the second active material 2, and the third active material may be materials having the same composition, or may be materials having compositions different from each other. The active material in the electrode according to Embodiment 1 may be composed only of the first active material 1 and the second active material 2.

The electrode according to Embodiment 1 may be a positive electrode.

When the electrode according to Embodiment 1 is a positive electrode, the positive electrode current collector is a sheet or a film made of a metal material such as aluminum, an aluminum alloy, stainless steel, titanium, or a titanium alloy, for example. The sheet or the film may be porous or may be non-porous. As the sheet or the film, a metal foil, a metal mesh, or the like is used. On the surface of the positive electrode current collector, a carbon material may be applied as a conductive auxiliary material.

When the electrode according to Embodiment 1 is a negative electrode, the negative electrode current collector is a sheet or a film made of a metal material such as stainless steel, nickel, a nickel alloy, copper, or a copper alloy, for example. The sheet or the film may be porous or may be non-porous. As the sheet or the film, a metal foil, a metal mesh, or the like is used. On the surface of the negative electrode current collector, a carbon material may be applied as a conductive auxiliary material.

The electrode according to Embodiment 1 can be manufactured by the following method, for example.

An active material (hereinafter, this may be referred to as "coated active material") whose surface is coated with the coating material 3 is obtained by attaching the coating material on the surfaces of the particles of the active material. For example, raw material powders are mixed to prepare the coating material 3. Then, the coating material 3 is attached to the surface of the active material.

The method for attaching the coating material 3 to the surface of the active material is not particularly limited. For example, when the coating material 3 is to be attached to the surface of the second active material 2, a powder of the second active material 2 and a powder of the coating material 3 are mixed at an appropriate ratio, to obtain a mixture. The mixture is subjected to a milling process to apply mechanical energy to the mixture. For the milling process, a mixing device such as a ball mill can be used. In order to suppress oxidation of the materials, the milling process may be performed in a dry atmosphere and an inert atmosphere.

The coated active material may be manufactured by a dry particle compositing method. The process according to the dry particle compositing method includes applying at least one mechanical energy selected from the group consisting of impact, compression, and shear to the active material and the coating material 3.

Examples of the device that can apply mechanical energy to the mixture of the active material and the coating material 3 include processing devices (particle compositing devices) such as a ball mill, "MECHANO FUSION" (manufactured by Hosokawa Micron), "Nobilta" (manufactured by Hosokawa Micron), or "BALANCE GRAN" (manufactured by FREUND TURBO).

In any of the devices, the area proportion (coating ratio) of the coating and the thickness of the coating can be controlled by adjusting conditions such as rotation speed, processing time, and charging amount. The process by the above devices is not mandatory. The coated active material may be manufactured by mixing the active material and the coating material 3 using a mortar, a mixer, or the like. The coating material 3 may be deposited on the surface of the active material by various methods such as a spray method, a spray dry coating method, an electrodeposition method, an immersion method, and a mechanical mixing method using a disperser. In this manner, an electrode material including the first active material 1, the second active material 2, and the coating material 3 is obtained.

Next, an electrode slurry including the electrode material is prepared. For example, the electrode material, a binder, and a conductive agent are dispersed in a dispersion medium to prepare the electrode slurry.

The electrode slurry is applied to the current collector 30 to form the active material layer 20. Specifically, the electrode slurry is applied to the current collector 30 to form a coating film. By removing the dispersion medium from the coating film, the active material layer 20 is obtained. An example of the method of removing the dispersion medium is heating the coating film. As the dispersion medium, N-methyl-2-pyrrolidone (NMP) or the like is used, for example. In this manner, an electrode is obtained.

In a case where the active material layer 20 includes the first active material layer 21 and the second active material layer 22, a first electrode slurry obtained by dispersing the first active material 1, a binder, and a conductive agent into a dispersion medium, and a second electrode slurry obtained by dispersing the second active material 2, a binder, and a conductive agent into a dispersion medium are prepared, for example. Then, the second electrode slurry is applied to the current collector 30 to form the second active material layer 22, and further, the first electrode slurry is applied to form the first active material layer 21.

### (Embodiment 2)

A battery according to Embodiment 2 includes a positive electrode, a negative electrode, and an electrolyte, and at least one selected from the group consisting of the positive electrode and the negative electrode is the electrode according to Embodiment 1. With this configuration, the battery according to Embodiment 2 can attain compatibility between sufficient output characteristics and high-temperature resistance.

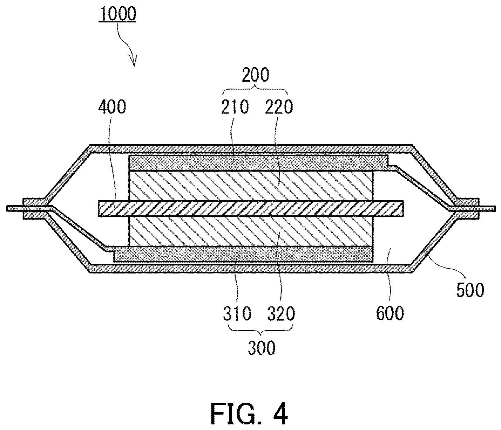

FIG. 4 is a cross-sectional view of a battery 1000 according to Embodiment 2. The battery 1000 includes a positive electrode 200, a negative electrode 300, a nonaqueous electrolyte 600, a separator 400, and an exterior 500. The positive electrode 200 has a positive electrode current collector 210 and a positive electrode active material layer 220. The positive electrode active material layer 220 is disposed on the positive electrode current collector 210. The negative electrode 300 has a negative electrode current collector 310 and a negative electrode active material layer 320. The negative electrode active material layer 320 is disposed on the negative electrode current collector 310. The separator 400 is disposed between the positive electrode 200 and the negative electrode 300. The positive electrode 200 and the negative electrode 300 face each other with the separator 400 therebetween. The positive electrode 200, the negative electrode 300, the separator 400, and the nonaqueous electrolyte 600 are housed in the exterior 500. The battery 1000 is typically a secondary battery.

Desirably, the positive electrode 200 is the electrode of Embodiment 1. With this configuration, while decomposition of other materials such as the electrolytic solution is suppressed in the positive electrode 200, sufficient output characteristics are exhibited. As a result, the effects of the output characteristics and the high-temperature resistance are obtained.

As the positive electrode current collector 210, the positive electrode current collector described above in Embodiment 1 is used, for example.

As the negative electrode current collector 310, the negative electrode current collector described above in Embodiment 1 is used, for example.

The negative electrode active material layer 320 may include a negative electrode active material that can occlude and release lithium. Examples of the negative electrode active material that can occlude and release lithium include lithium titanate, graphite, silicon, silicon-containing oxides, zinc alloys, lithium metal, lithium alloys, and the like. At least one selected from these negative electrode active materials can be used.

The nonaqueous electrolyte 600 may be included in the positive electrode 200, the negative electrode 300, and the separator 400. The nonaqueous electrolyte 600 may fill the internal space of the exterior 500. Due to the action of the nonaqueous electrolyte 600, lithium ions can move back and forth between the positive electrode 200 and the negative electrode 300. The nonaqueous electrolyte 600 may include a nonaqueous electrolytic solution, a gel electrolyte, or an ion liquid.

The nonaqueous electrolytic solution includes a nonaqueous solvent and a lithium salt, for example.

As the nonaqueous solvent, a cyclic carbonic ester, a linear carbonic ester, a cyclic ether, a linear ether, a cyclic ester, a linear ester, a fluorinated solvent, a nitrile, or the like can be used. Examples of the cyclic carbonic ester include ethylene carbonate, propylene carbonate, butylene carbonate, and the like. Examples of the linear carbonic ester include dimethyl carbonate, ethyl methyl carbonate, diethyl carbonate, and the like. Examples of the cyclic ether include tetrahydrofuran, 1,4-dioxane, 1,3-dioxolane, and the like. Examples of the linear ether include 1,2-dimethoxyethan, 1,2-diethoxyethane, and the like. Examples of the cyclic ester include γ-butyrolactone and the like. Examples of the linear ester include methyl acetate and the like. Examples of the fluorinated solvent include fluoroethylene carbonate, methyl fluoropropionate, fluorobenzene, fluoroethyl methyl carbonate, fluorodimethylene carbonate, and the like. Examples of the nitrile include acetonitrile and the like. At least one selected from these nonaqueous solvents can be used.

Examples of the lithium salt include lithium hexafluorophosphate (LiPF₆), lithium tetrafluoroborate (LiBF₄), lithium perchlorate (LiCIO₄), lithium bis(fluorosulfonyl)imide (LiFSI), lithium bis(trifluoromethanesulfonyl)imide (LiTFSI), lithium bis(perfluoroethylsulfonyl)imide (LiN(SO₂C₂F₅)₂), LiAsF₆, LiCF₃SO₃, lithium difluoro(oxalato)borate, and the like. At least one selected from these lithium salts can be used.

The gel electrolyte can be a material obtained by impregnating a polymer material with a nonaqueous electrolytic solution. Examples of the polymer material include polyethylene oxide, polyacrylonitrile, polyvinylidene fluoride, polymethyl methacrylate, a polymer having an ethylene oxide bond, and the like.

Examples of cations forming the ion liquid include aliphatic linear quaternary cations, aliphatic cyclic ammonium, nitrogen-containing heterocyclic aromatic cations, and the like. Examples of the aliphatic linear quaternary cations include tetraalkylammonium, tetraalkylphosphonium, and the like. Examples of the aliphatic cyclic ammonium include pyrrolidiniums, morpholiniums, imidazoliniums, tetrahydropyrimidiniums, piperaziniums, piperidiniums, and the like. Examples of the nitrogen-containing heterocyclic aromatic cations include pyridiniums, imidazoliums, and the like. Examples of the anions forming the ion liquid include PF₆⁻, BF₄⁻, SbF₆⁻, AsF₆⁻, SO₃CF₃⁻, N(SO₂F)₂⁻, N(SO₂CF₃)₂⁻, N(SO₂C₂F₅)₂⁻, N(SO₂CF₃)(SO₂C₄F₉)⁻, C(SO₂CF₃)₃⁻, and the like. The ion liquid may contain a lithium salt.

The separator 400 is an electrolyte layer having lithium ion conductivity. As long as passage of lithium ions is allowed, the material of the separator 400 is not particularly limited. The material of the separator 400 can be at least one selected from the group consisting of a solid electrolyte, a gel electrolyte, an ion exchange resin membrane, a semipermeable membrane, and a porous membrane. When the separator 400 is made of these materials, safety of the battery 1000 can be sufficiently ensured. Examples of the solid electrolyte include sulfide solid electrolytes such as Li₂S-P₂S₅, oxide solid electrolytes such as Li₇La₃Zr₂O₁₂ (LLZ), and the like. Examples of the gel electrolyte include gel electrolytes that include a fluororesin such as PVdF. Examples of the ion exchange resin membrane include cation exchange membranes, anion exchange membranes, and the like. Examples of the porous membrane include porous membranes made of polyolefin resin, porous membranes composed of glass paper obtained by weaving glass fibers into a nonwoven fabric, and the like.

The exterior 500 is made of a material obtained by laminating a metal foil such as an aluminum foil with a resin film such as a PET film, for example. The exterior 500 may be a container made of resin or made of metal.

The shape of the battery 1000 is not limited to a laminated type. Examples of other shapes of the battery 1000 include coin type, cylindrical type, prismatic type, sheet type, button type, flat type, and the like.

The battery 1000 may be a solid-state battery.

When the battery 1000 is a solid-state battery, a solid electrolyte is used in the positive electrode 200, the negative electrode 300, and the separator 400, instead of the nonaqueous electrolyte 600. Examples of the solid electrolyte include halide solid electrolytes, sulfide solid electrolytes, oxide solid electrolytes, polymer solid electrolytes, complex hydride solid electrolytes, and the like. In each of the positive electrode 200, the negative electrode 300, and the separator 400, at least one selected from these solid electrolytes can be used.

### (Other embodiments)

### (Additional notes)

The following technologies are disclosed by the description of the above embodiment.

### (Technology 1)

An electrode including:
a first active material;
a second active material; and
a coating material, wherein
the first active material has a surface of which 0% or more and less than 35% is coated with the coating material,
the second active material has a surface of which 90% or more is coated with the coating material, and
the coating material includes Li, Ti, M, and F,
where M is at least one selected from the group consisting of Ca, Mg, Al, Y, and Zr.

With this configuration, compatibility between output characteristics and high-temperature resistance of the battery can be attained.

### (Technology 2)

The electrode according to technology 1, wherein a mass proportion of the first active material, with respect to a total of the first active material and the second active material, is 67% or less. With this configuration, compatibility between output characteristics and high-temperature resistance of the battery can be attained.

### (Technology 3)

The electrode according to technology 1 or 2, wherein the first active material includes an active material whose surface is not coated with the coating material. With this configuration, compatibility between output characteristics and high-temperature resistance of the battery can be attained.

### (Technology 4)

The electrode according to technology 3, wherein a mass proportion of the active material whose surface is not coated, with respect to a total of the first active material and the second active material, is 50% or less. With this configuration, compatibility between output characteristics and high-temperature resistance of the battery can be attained.

### (Technology 5)

The electrode according to any one of technologies 1 to 4, wherein an average particle diameter of particles of the first active material is smaller than an average particle diameter of particles of the second active material. With this configuration, sufficient output characteristics can be realized.

### (Technology 6)

The electrode according to any one of technologies 1 to 5, wherein a specific surface area of the first active material is larger than a specific surface area of the second active material. With this configuration, sufficient output characteristics can be realized.

### (Technology 7)

The electrode according to any one of technologies 1 to 6, wherein
the coating material includes a material represented by a composition formula (1) below,

   Li_{6-(4-4x+mx)b}(Ti₁₋ₓMₓ)_{b}F₆ ... formula (1)
where m is a valence of M, and
0<x<1 and 0<b≤3 are satisfied.

### (Technology 8)

The electrode according to any one of technologies 1 to 7, including a mixture of the first active material and the second active material. With this configuration, compatibility between output characteristics and high-temperature resistance of the battery can be attained.

### (Technology 9)

The electrode according to any one of technologies 1 to 7, including a first active material layer and a second active material layer, wherein the first active material layer includes the first active material, and the second active material layer includes the second active material. With this configuration, the output characteristics of the battery can be improved.

### (Technology 10)

The electrode according to technology 9, further including a current collector, wherein the second active material layer is positioned between the first active material layer and the current collector. With this configuration, the output characteristics of the battery can be further improved.

### (Technology 11)

A battery including:
a positive electrode;
a negative electrode; and
an electrolyte, wherein
at least one selected from the group consisting of the positive electrode and the negative electrode is the electrode according to any one of technologies 1 to 10.

With this configuration, compatibility between output characteristics and high-temperature resistance can be attained.

### (Technology 12)

An electrode material including:
a first active material;
a second active material, and
a coating material, wherein
the first active material has a surface of which 0% or more and less than 35% is coated with the coating material,
the second active material has a surface of which 90% or more is coated with the coating material, and
the coating material includes Li, Ti, M, and F,
where M is at least one selected from the group consisting of Ca, Mg, Al, Y, and Zr.

With this configuration, a battery in which compatibility between output characteristics and high-temperature resistance are attained can be achieved.

### [Examples]

Hereinafter, the present disclosure will be described in more detail by using Examples. The following Examples are merely examples of an aspect, and the present disclosure is not limited thereto.

### (Example 1)

### [Production of coating material]

In an argon atmosphere, as a raw material powder, LiF, TiF₄, and AIF₃ were weighed so as to realize a molar ratio of LiF:TiF₄:AIF₃=2.7:0.3:0.7. Then, using a planetary ball mill (manufactured by FRITSCH, P-7 TYPE), a milling process was performed for 12 hours at 500 rpm, to obtain a coating material (hereinafter, referred to as "LTAF") having a composition of Li_{2.7}Ti_{0.3}Al_{0.7}F₆.

### [Production of positive electrode]

As a first active material, a lithium cobalt oxide powder (average particle diameter of 6 µm, specific surface area of 0.84 m²/g) was prepared. Hereinafter, lithium cobalt oxide may be referred to as "LCO".

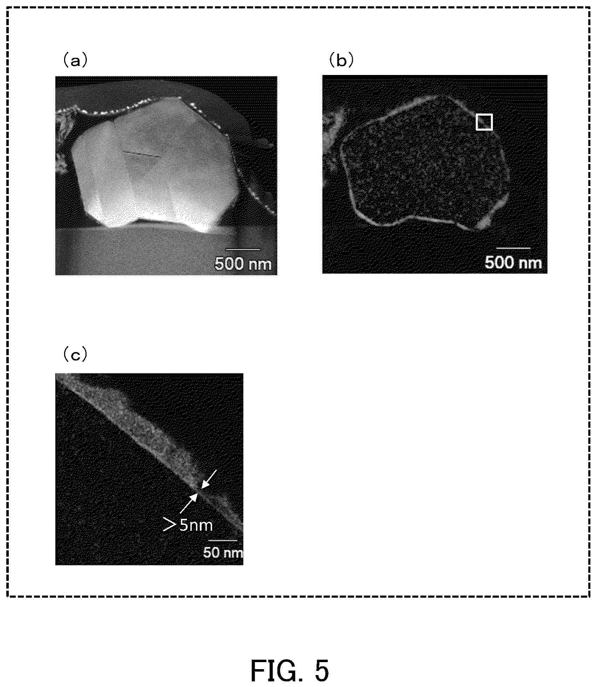

A second active material coated with the coating material was produced in the following manner. LCO and LTAF were mixed at a mass ratio of 100:3, the resultant mixture was put into a particle compositing device (manufactured by Hosokawa Micron), and a compositing process was performed under a condition of 6000 rpm for 30 minutes, to obtain a second active material in which the surface of the positive electrode active material was coated with LTAF. The second active material was observed with a TEM to confirm the coating state. The coating ratio of the second active material was 100% in area proportion. FIG. 5 shows an electron micrograph of a cross section of the second active material according to Example 1. FIG. 5(a) shows a scanning transmission electron microscopy (STEM) image of a cross section of the second active material. FIG. 5(b) shows a TEM-EDX analysis result (fluorine mapping image) corresponding to FIG. 5(a). FIG. 5(c) shows a TEM-EDX analysis result in an enlarged view corresponding to the inside of the white frame in FIG. 5(b). With respect to the second active material, the entirety of the surface was coated with the coating material, and as shown in FIG. 5(c), the thickness of the coating formed by the coating material was more than 5 nm even in a portion of low contrast in FIG. 5(b).

The first active material, the above coated second active material, acetylene black (conductive agent), and polytetrafluoroethylene (binder) were mixed at a mass ratio of 45:46.4:5:5 to obtain a positive electrode mixture paste. The positive electrode mixture paste was dried to obtain a positive electrode mixture. About 100 mg of the obtained positive electrode mixture was pressure-molded at 10 kN/cm² to obtain a pellet (diameter: 10 mm). The obtained pellet was dried at 200°C to obtain the positive electrode of Example 1. In the positive electrode, the mass ratio between the first active material and the second active material was the first active material:the second active material=5:5. The addition amount of LTAF with respect to the total amount of the first active material and the second active material was 1.5 mass%.

### [Production of negative electrode]

First, powders of boric acid (H₃BO₃, boron compound) and acetylene black were mixed to obtain a mixture. Next, to the mixture, an aqueous dispersion of a powder of styrene-butadiene latex was added and mixed, to obtain a first mixture. Next, to the first mixture, a powder of lithium titanate (Li₄Ti₅O₁₂, negative electrode active material) was mixed to obtain a negative electrode mixture paste. In the negative electrode mixture paste, the mixing ratio between these materials was lithium titanate:acetylene black:styrene-butadiene latex (solid content):boric acid=90:5.0:4.6:0.4 (mass ratio). Next, the negative electrode mixture paste was dried to obtain a negative electrode mixture. The obtained negative electrode mixture was pressure-molded under a pressure of 20 kN/cm² to obtain a pellet (diameter: 10 mm). The obtained pellet was dried at 150°C to obtain a negative electrode.

### [Preparation of electrolytic solution]

Lithium tetrafluoroborate (LiBF₄) was dissolved in γ-butyrolactone to obtain an electrolytic solution. The concentration of lithium tetrafluoroborate in the electrolytic solution was 1.0 mol/L.

### [Production of battery]

The positive electrode and the negative electrode of Example 1, and a polypropylene-made nonwoven fabric were disposed in a coin case, and 90 mg of the electrolytic solution was injected into the case. The coin case was sealed with a lid body, whereby an evaluation cell of Example 1 was produced.

### (Example 2)

In the same manner as in Example 1, the first active material and the second active material coated with the coating material were prepared.

The first active material, acetylene black, and polytetrafluoroethylene were mixed at a mass ratio of 90:5:5 to obtain a first positive electrode mixture paste. The first positive electrode mixture paste was dried to obtain a first positive electrode mixture.

The above coated second active material, acetylene black, and polytetrafluoroethylene were mixed at a mass ratio of 92.7:5:5 to obtain a second positive electrode mixture paste. The second positive electrode mixture paste was dried to obtain a second positive electrode mixture.

About 50 mg of the obtained first positive electrode mixture was pressure-molded at 10 kN/cm² to obtain a first pellet (diameter: 10 mm). About 50 mg of the second positive electrode mixture was placed on the pellet, and the resultant matter was pressure-molded at 10 kN/cm², to obtain a laminate pellet (diameter: 10 mm) in which the first active material and the second active material were laminated. The obtained laminate pellet was dried at 200°C to obtain a positive electrode of Example 2. The mass ratio between the first active material and the second active material in the positive electrode was the first active material:the second active material=5:5. The addition amount of LTAF with respect to the total amount of the first active material and the second active material was 1.5 mass%.

Using the positive electrode of Example 2, an evaluation cell of Example 2 was produced in the same manner as in Example 1.

### (Example 3)

In the same manner as in Example 2, the first positive electrode mixture paste and the second positive electrode mixture were obtained. About 10 mg of the first positive electrode mixture was pressure-molded at 10 kN/cm² to obtain a first pellet (diameter: 10 mm). About 90 mg of the second positive electrode mixture was further placed on the first pellet, and the resultant matter was pressure-molded at 10 kN/cm², to obtain a laminate pellet (diameter: 10 mm). The obtained laminate pellet was dried at 200°C to obtain a positive electrode of Example 3. The mass ratio between the first active material and the second active material in the positive electrode was the first active material:the second active material=1:9. The addition amount of LTAF with respect to the total amount of the first active material and the second active material was 2.7 mass%.

Using the positive electrode of Example 3, an evaluation cell of Example 3 was produced in the same manner as in Example 1.

### (Example 4)

A first active material whose surface was partially coated with the coating material was prepared in the following manner. Except that LCO and LTAF were mixed at a mass ratio of 100:0.75, a first active material in which the surface of the positive electrode active material was partially coated with LTAF was prepared according to the same procedure as in the production of the second active material of Example 1. The coating ratio, by the coating material, of the first active material was 32% in area proportion.

In the same manner as in Example 1, the second active material coated with the coating material was obtained.

The above first active material, the second active material, acetylene black, and polytetrafluoroethylene were mixed at a mass ratio of 59.8:31.5:5:5 to obtain a positive electrode mixture paste. The positive electrode mixture paste was dried to obtain a positive electrode mixture. About 100 mg of the obtained positive electrode mixture was pressure-molded at 10 kN/cm² to obtain a pellet (diameter: 10 mm). The obtained pellet was dried at 200°C to obtain a positive electrode of Example 4. The mass ratio between the first active material and the second active material in the positive electrode of Example 4 was 66:34. The mass proportion of LTAF with respect to the total amount of the first active material and the second active material was 1.5%.

Using the positive electrode of Example 4, an evaluation cell of Example 4 was produced in the same manner as in Example 1.

### (Comparative Example 1)

In the same manner as in Example 1, the second active material coated with the coating material was obtained.

The above second active material, acetylene black, and polytetrafluoroethylene were mixed at a mass ratio of 92.7:5:5 to obtain a positive electrode mixture paste. The positive electrode mixture paste was dried to obtain a positive electrode mixture. About 100 mg of the obtained positive electrode mixture was pressure-molded at 10 kN/cm² to obtain a pellet (diameter: 10 mm). The obtained pellet was dried at 200°C to obtain a positive electrode of Comparative Example 1. The positive electrode of Comparative Example 1 corresponds to that obtained by replacing all of the first active material in the positive electrode of Example 1 with the second active material. The addition amount of LTAF with respect to the total amount of the active material in the positive electrode of Comparative Example 1 was 3.0 mass%.

Using the positive electrode of Comparative Example 1, an evaluation cell of Comparative Example 1 was produced in the same manner as in Example 1.

### (Comparative Example 2)

LCO, acetylene black, and polytetrafluoroethylene were mixed at a mass ratio of 90:5:5 to obtain a positive electrode mixture paste. The positive electrode mixture paste was dried to obtain a positive electrode mixture. About 100 mg of the obtained positive electrode mixture was pressure-molded at 10 kN/cm² to obtain a pellet (diameter: 10 mm). The obtained pellet was dried at 200°C to obtain a positive electrode of Comparative Example 2. The positive electrode of Comparative Example 2 corresponds to that obtained by replacing all the second active material in the positive electrode of Example 1 with the first active material.

Using the positive electrode of Comparative Example 2, an evaluation cell of Comparative Example 2 was produced in the same manner as in Example 1.

### (Comparative Example 3)

LCO and LTAF were mixed at a mass ratio of 100:1.5, the resultant mixture was put into a particle compositing device (manufactured by Hosokawa Micron), and a compositing process was performed under a condition of 6000 rpm for 30 minutes. Accordingly, a coated positive electrode active material of Comparative Example 3 in which the surface of the positive electrode active material was coated with LTAF was obtained. The coated positive electrode active material was observed with a TEM to confirm the coating state. The coating ratio at the coated positive electrode active material of Comparative Example 3 was 50% in area proportion.

The coated positive electrode active material of Comparative Example 3, acetylene black, and polytetrafluoroethylene were mixed at a mass ratio of 91.4:5:5 to obtain a positive electrode mixture paste. The positive electrode mixture paste was dried to obtain a positive electrode mixture. About 100 mg of the obtained positive electrode mixture was pressure-molded at 10 kN/cm² to obtain a pellet (diameter: 10 mm). The obtained pellet was dried at 200°C to obtain a positive electrode of Comparative Example 3. The positive electrode of Comparative Example 3 corresponds to that obtained by replacing all of the first active material and the second active material of Example 1 with the coated positive electrode active material of Comparative Example 3. The addition amount of LTAF with respect to the total amount of the active material in the positive electrode of Comparative Example 3 was 1.5 mass%.

Using the positive electrode of Comparative Example 3, an evaluation cell of Comparative Example 3 was produced in the same manner as in Example 1.

### [Evaluation of initial output]

The initial outputs of the batteries of Examples 1 to 4 and Comparative Examples 1 to 3 were evaluated according to the following method. In a thermostatic chamber at 25°C, each battery was charged up to 2.5 V at a current value corresponding to a C rate of 0.05 C, and then, was charged until the current value became 0.01 C or less at a constant voltage of 2.5 V. The battery voltage when the charged battery was subjected to a single pulse discharge (discharge for 50 ms at a current value of 10 mA) in an environment of -40°C was measured, whereby the initial output was evaluated. With the battery voltage observed in Comparative Example 2 taken as 100%, the initial outputs of Examples 1 to 4 and Comparative Examples 1 and 3 were calculated. The results are shown in Table 1.

### [High-temperature storage test]

A high-temperature storage test was performed on the batteries of Examples 1 to 4 and Comparative Examples 1 to 3 according to the following method. In a thermostatic chamber at 25°C, each battery was charged up to 2.5 V at a current value corresponding to a C rate of 0.05 C, and then, was charged until the current value became 0.01 C or less at a constant voltage of 2.5 V. The charged battery was stored in a thermostatic chamber at 100°C for 400 hours. Then, the battery was returned to the thermostatic chamber at 25°C, the remaining capacity when the battery was discharged down to 1.5 V at a current value corresponding to a C rate of 0.05 C was measured, and the post-storage capacity was evaluated. The results are shown in Table 1.

In Table 1, the initial output is a relative value when that in Comparative Example 2 was taken as 100%. The post-storage capacity is a relative value when the post-storage capacity in Comparative Example 1 was taken as 100%. The LTAF addition ratio is the mass proportion of LTAF with respect to the entire positive electrode active material in the positive electrode.

**[Table 1]**

| | Ratio between first active material and second active material | Structure of positive electrode active material layer | LTAF addition ratio (mass%) | Initial output (%) | Post-storage capacity (%) |
|---|---|---|---|---|---|
| Example 1 | 5:5 | mixed | 1.5 | 93 | 60 |
| Example 2 | 5:5 | two layers | 1.5 | 98 | 60 |
| Example 3 | 1:9 | two layers | 2.7 | 95 | 94 |
| Example 4 | 66:34 | mixed | 1.5 | 91 | 64 |
| Comparative Example 1 | 0:10 | - | 3 | 70 | 100 |
| Comparative Example 2 | 10:0 | - | 0 | 100 | 40 |
| Comparative Example 3 | - | - | 1.5 | 85 | 60 |

Examples 1 to 4 showed good initial output and post-storage capacity. Therefore, in Examples 1 to 4, compatibility between output characteristics and high-temperature resistance was attained.

In Examples 1 to 4, as compared with Comparative Example 1, the initial output was significantly improved. In Comparative Example 1 in which the positive electrode was produced by using only the second positive electrode active material, the proportion of LTAF in the active material layer amount was high as compared with the other Examples, and thus, Comparative Example 1 had a significantly decreased initial output.

In Examples 1 to 4, as compared with Comparative Example 2 in which the active material coated with LTAF was not included, the post-storage capacity was significantly improved.

As understood through comparison between Examples 1, 2, and 4, and Comparative Example 3, even when the LTAF addition ratios with respect to the total amount of the active material in the positive electrode were the same, the initial output was improved due to inclusion of the first active material and the second active material, and the output characteristics were improved. In Example 4, the post-storage capacity was also improved.

As understood through comparison between Examples 1, and Examples 2 and 3, when the positive electrode has a laminated structure including the first active material layer and the second active material layer, the output characteristics can be further improved.

### INDUSTRIAL APPLICABILITY

The technology of the present disclosure is useful for a secondary battery used in an in-vehicle electronic device and the like.

## Claims

1. An electrode comprising:
a first active material;
a second active material; and
a coating material, wherein
the first active material has a surface of which 0% or more and less than 35% is coated with the coating material,
the second active material has a surface of which 90% or more is coated with the coating material, and
the coating material includes Li, Ti, M, and F,
where M is at least one selected from the group consisting of Ca, Mg, Al, Y, and Zr.

2. The electrode according to claim 1, wherein
a mass proportion of the first active material, with respect to a total of the first active material and the second active material, is 67% or less.

3. The electrode according to claim 1, wherein
the first active material includes an active material whose surface is not coated with the coating material.

4. The electrode according to claim 3, wherein
a mass proportion of the active material whose surface is not coated, with respect to a total of the first active material and the second active material, is 50% or less.

5. The electrode according to claim 1, wherein
an average particle diameter of particles of the first active material is smaller than an average particle diameter of particles of the second active material.

6. The electrode according to claim 1, wherein
a specific surface area of the first active material is larger than a specific surface area of the second active material.

7. The electrode according to claim 1, wherein
the coating material includes a material represented by a composition formula (1) below,
Li_{6-(4-4x+mx)b}(Ti₁₋ₓMₓ)_{b}F₆ ... formula (1)
where m is a valence of M, and
0<x<1 and 0<b≤3 are satisfied.

8. The electrode according to claim 1, comprising
a mixture of the first active material and the second active material.

9. The electrode according to claim 1, comprising
a first active material layer and a second active material layer, wherein
the first active material layer includes the first active material, and
the second active material layer includes the second active material.

10. The electrode according to claim 9, further comprising
a current collector, wherein
the second active material layer is positioned between the first active material layer and the current collector.

11. A battery comprising:
a positive electrode;
a negative electrode; and
an electrolyte, wherein
at least one selected from the group consisting of the positive electrode and the negative electrode is the electrode according to any one of claims 1 to 10.

12. An electrode material comprising:
a first active material;
a second active material; and
a coating material, wherein
the first active material has a surface of which 0% or more and less than 35% is coated with the coating material,
the second active material has a surface of which 90% or more is coated with the coating material, and
the coating material includes Li, Ti, M, and F,
where M is at least one selected from the group consisting of Ca, Mg, Al, Y, and Zr.
